**Europäisches Patentamt**

**European Patent Office**

**Office européen des brevets**

(11) Veröffentlichungsnummer: **0 102 939**
**B1**

(12) **EUROPÄISCHE PATENTSCHRIFT**

(45) Veröffentlichungstag der Patentschrift:
**14.09.88**

(51) Int. Cl.⁴: **H 01 H 35/14,** G 01 K 7/00

(21) Anmeldenummer: **83890095.9**

(22) Anmeldetag: **06.06.83**

(54) **Elektronisches Fieberthermometer mit Beschleunigungsschalter.**

(30) Priorität: **08.06.82 AT 2226/82**

(43) Veröffentlichungstag der Anmeldung:
**14.03.84 Patentblatt 84/11**

(45) Bekanntmachung des Hinweises auf die Patenterteilung:
**14.09.88 Patentblatt 88/37**

(84) Benannte Vertragsstaaten:
**BE CH DE FR GB IT LI LU NL SE**

(56) Entgegenhaltungen:
**DE - A - 2 515 635**
**DE - A - 2 545 099**
**DE - A - 2 606 790**
**DE - A - 2 856 424**
**DE - A - 2 947 106**
**GB - A - 2 111 686**
**US - A - 3 946 173**
**US - A - 4 174 631**

(73) Patentinhaber: **Elkon Erzeugung von elektronischen Geräten Gesellschaft m.b.H., Nothartgasse 17, A-1130 Wien (AT)**

(72) Erfinder: **Keznickl, Eduard, Ing., Nothartgasse 17, A-1130 Wien (AT)**

(74) Vertreter: **Beer, Otto, Dipl.-Ing. et al, Lindengasse 8, A-1071 Wien (AT)**

ACTORUM AG

**Beschreibung**

Die Erfindung betrifft ein elektronisches Fieberthermometer mit einem im wesentlichen stabförmigen Gehäuse, das an einem Ende einen Temperaturfühler aufweist, mit einem Schaltkreis, einem Speicher zum Speichern des Wertes der höchsten gemessenen Temperatur und mit einer Anzeigevorrichtung für den gespeicherten Inhalt des Speichers und mit einer Schalteinrichtung.

Ein solches Fieberthermometer ist beispielsweise in DE-A-2 515 635 offenbart. Bekannte Fieberthermometer arbeiten nach dem Prinzip der Wärmeausdehnung von flüssigen Körpern oder nach dem Prinzip der Änderung des elektrischen Widerstandes eines Leiters in Abhängigkeit von der Temperatur.

Die seit langem bekannten Quecksilberthermometer besitzen grosse Nachteile, obwohl sie sehr verbreitet sind.

Ein Nachteil ist die grosse Bruchempfindlichkeit. Bei einem Bruch wird nicht nur das Fieberthermometer zerstört und unbrauchbar, sondern das ausfliessende, giftige Quecksilber kann auch gesundheitliche Schäden und die Glassplitter Verletzungen besonders bei Kindern verursachen.

Ein weiterer Nachteil ist die schlechte Ablesbarkeit der Quecksilbersäule in der dünnen Glasröhre.

Bekannte elektronische Fieberthermometer beseitigen zwar diese Nachteile, haben aber andere Mängel, die eine nennenswerte Verbreitung bisher verhindert haben.

Der Umstand, dass der Messfühler vom Anzeigegerät getrennt ist, macht sich im Gebrauch sehr nachteilig bemerkbar und ist aufwendig. Das bei diesem Aufbau notwendige Verbindungskabel stört bei der Handhabung und bei der Aufbewahrung. Das Anzeigegerät muss bei der Messung gehalten oder sonst irgendwie abgelegt werden, was den bisherigen Gewohnheiten beim Fiebermessen widerspricht.

Die bekannten elektronischen Fieberthermometer besitzen Druck- oder Schiebeschalter für das Ein- oder Ausschalten sowie für die Eichkontrolle wie z.B. jenes, das aus der obengenannten DE-A-2 515 635 bekannt ist.

Diese Bedienungselemente sind ungewohnt und bedürfen einer besonderen Erläuterung.

Ein Nachteil dieser Schalter ist ferner, dass sie Öffnungen im Gehäuse voraussetzen. Solche Spalten und Öffnungen sind aus hygienischen Gründen abzulehnen und machen überdies eine Sterilisation unmöglich.

Ein weiterer grundsätzlicher Mangel dieser bekannten Schalter ist, dass sie unabsichtlich betätigt werden können, was in der Regel zur Entladung der Batterie führt.

Aus der US-A-3 946 173 ist eine Schalteinrichtung für eine Armbanduhr bekannt, die eine in einem Führungsrohr aufgenommene Kugel aufweist. Die Kugel kann durch Bewegen der Uhr im Führungsrohr verlagert werden, um Kontakte zu überbrücken, so dass der Anzeigeteil der Uhr aktiviert wird.

Andere Konstruktionen für Beschleuigungsschalter sind durch die DE-A-2 545 099 und die DE-A-2 856 424 bekannt. Diese bekannten Schalteinrichtungen dienen zur Steuerung unwuchtbeaufschlagter Geräte, wie Waschmaschinen, bzw. zum Zählen einer Anzahl von auf eine Vorrichtung, z.B. auf Tennisschläger, ausgeübten Kraftimpulsen.

Der Erfindung liegt die Aufgabe zugrunde, die Nachteile der bekannten elektronischen Fieberthermometer zu vermeiden.

Erfindungsgemäss wird dies dadurch erreicht, dass die Schalteinrichtung einen Schalter enthält, der als Beschleunigungsschalter ausgebildet ist und ein in Richtung der Längsachse des stabförmigen Gehäuses bewegliches Gewicht aufweist, wobei das Gewicht beim Ausführen einer Schleuderbewegung entgegen der Kraft einer Feder zum kurzzeitigen Schliessen von Kontakten beweglich ist, und dass durch die Schliessung des Beschleunigungsschalters ein willkürliches Ein- und/oder Ausschalten des Fieberthermometers bzw. ein Löschen des Messwertspeichers erfolgt.

Durch das erfindungsgemässe elektronische Fieberthermometer werden alle Nachteile der bekannten Konstruktionen vermieden.

Durch die Verwendung eines Beschleunigungsschalters ergibt sich die Möglichkeit, das elektronische Fieberthermometer gemäss der Erfindung so wie ein herkömmliches Quecksilber-Fieberthermometer zu verwenden, nämlich durch eine Schleuderbewegung für die Messung der Körpertemperatur vorzubereiten.

Es ist möglich, das erfindungsgemässe Fieberthermometer so auszubilden, dass es allen Anforderungen in bezug auf Hygiene und Messpraxis sowohl in der Hand des Laien als auch im klinischen Einsatz gerecht wird.

So kann z.B. bei einmaliger Betätigung des Schalters die Programmelektronik (z.B. ein Mikroprozessor) auf Batteriekontrolle bzw. Kontrolle des Eichzustandes schalten. Bei weiterer Schalterbetätigung schaltet das Gerät automatisch auf Temperaturmessung und liefert eine Maximalwertanzeige, die durch neuerliche Schalterbetätigung wieder löschbar ist, wobei das Gerät auf einen vorgewählten Temperaturwert zurückgesetzt wird.

Die Abschaltung des -Gerätes erfolgt vorteilhaft eine vorbestimmte Zeit nach der letzten Betätigung des Schalters. Weitere Merkmale der Erfindung ergeben sich aus der nachfolgenden Beschreibung einiger Ausführungsbeispiele in Verbindung mit der Zeichnung.

Figur 1 veranschaulicht ein Fieberthermometer gemäss der Erfindung, teilweise im Schnitt,

Figur 2 ist das zugehörige Blockschaltbild,

Figuren 3 und 4 zeigen Ausführungsformen des Beschleunigungsschalters und

Figur 5 stellt das Blockschaltbild einer alternativen Ausführungsvariante zur Schaltung nach Figur 2 dar.

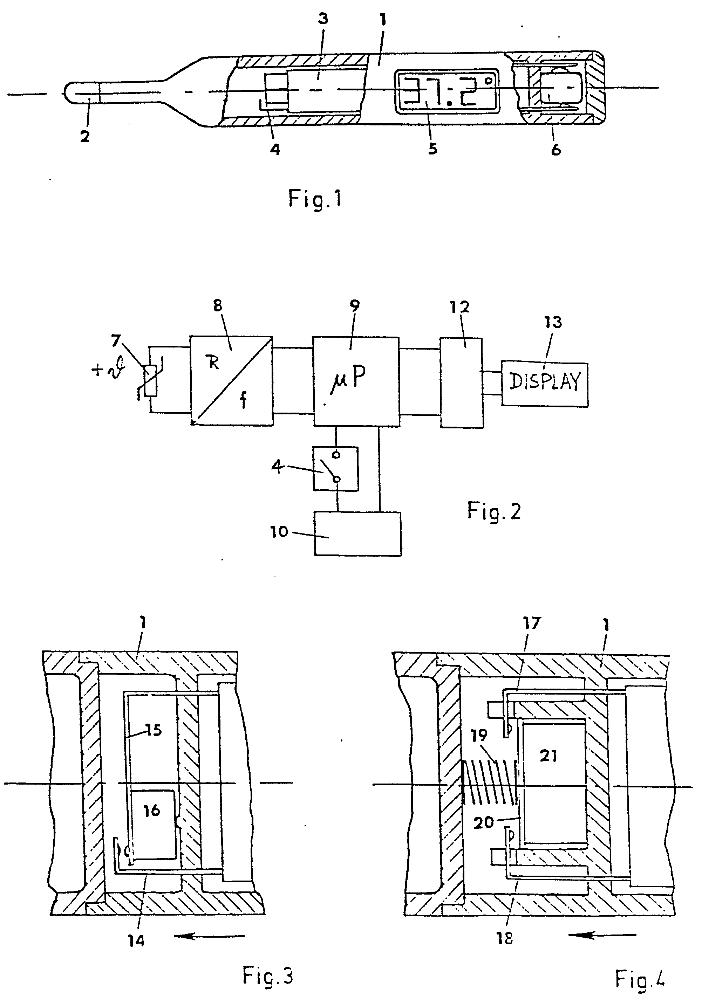

Das Fieberthermometer nach Figur 1 enthält in einem Gehäuse 1 eine Messsonde 2, eine Messelektronikeinheit 3, ein Schaltelement, den Beschleunigungsschalter 4 sowie eine Anzeigeeinrichtung 5. Eine Batterie 6 ist in einem mit einem Deckel, vorzugsweise mit einem dichten Schraubverschluss verschliessbaren Gehäuseteil untergebracht.

Vorzugsweise sind die Durchführungen von der Batteriekammer in das Hauptgehäuse hermetisch dicht ausgeführt.

Figur 2 zeit den elektronischen Aufbau des Gerätes. Ein temperaturabhängiger Widerstand 7 ist mit einem Widerstands-Frequenz-Wandler 8 verbunden und liefert eine temperaturproportionale Frequenz, die einem Mikroprozessor 9 zugeführt wird. Der Mikroprozessor 9 steuert in Abhängigkeit von der Anzahl der Betätigungen eines Schalters 4 entsprechend seinem Programm über einen Treiber 12 eine Anzeigevorrichtung 13 an, die den Eichzustand bzw. die Temperatur anzeigt. Ebenfalls mit dem Mikroprozessor 9 verbunden ist eine Stromversorgung 10.

Figur 3 zeigt ein erstes Ausführungsbeispiel eines Beschleunigungsschalters für das erfindungsgemässe Fieberthermometer.

Im Gehäuse 1 ist eine starre Kontaktzunge 14 und eine federnde Kontaktzunge 15 gelagert. Ein Gewicht 16 ist mit der beweglichen Zunge 15 verbunden und liegt im Ruhezustand am Gehäuse 1 an. Die Kontakte sind offen. Bei einer Schleuderbewegung in Pfeilrichtung bewirkt die Massenträgheit des Gewichtes 16 ein Abheben der federnden Kontaktzunge 15 von der Gehäusewand und ein Schliessen des Kontaktpaares für kurze Zeit.

Ein anderes Ausführungsbeispiel eines Schalters zeigt Figur 4. Im Gehäuse 1 sind starre Kontaktzungen 17 und 18 gelagert. Eine Feder 19 drückt ein Kontaktstück 20 gegen ein Gewicht 21 und dieses gegen die Gehäusewand. Bei einer Schleuderbewegung in Pfeilrichtung kommt es zu einem kurzzeitigen Schliessen der Kontakte 17, 18.

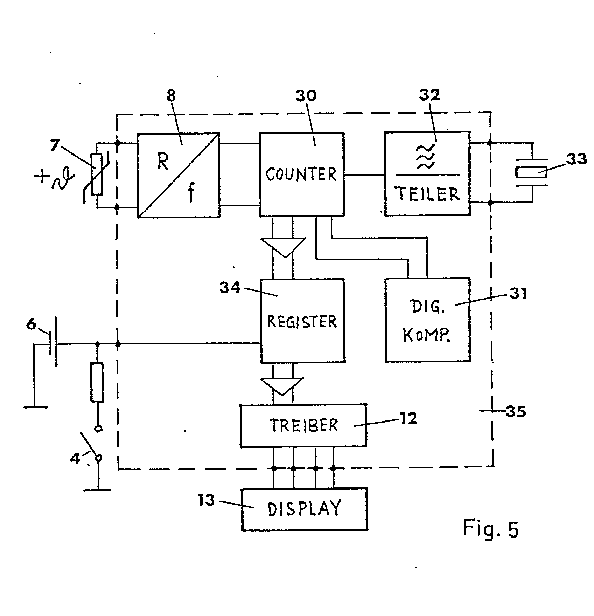

Figur 5 zeigt ein Blockschaltbild einer anderen Ausführungsvariante eines Fieberthermometers:

Anstelle eines Mikroprozessors ist diese Schaltung mit einem hochintegrierten Digital-Schaltkreis ausgerüstet, der die gesamte Auswerteschaltung umfasst.

Das Analogsignal des Temperatursensors 7 wird in dem Widerstands-Frequenz-Wandler in Digitalimpulse umgewandelt, die einer Zählstufe 30 zugeführt werden.

In einem Digital-Komperator 31 werden die Signale der Zählstufe 30 mit den Ausgangsimpulsen eines Referenzoszillators 32 verglichen.

Als Frequenznormal ist ein Schwingquarz 33 vorgesehen, dessen Frequenz in der Oszillatorstufe geteilt wird.

Das Ausgangssignal des Digital-Komperators 31 gelangt über ein Register 34 und den Treiber 12 zur Anzeigevorrichtung 13.

Die Schaltung wird, über den Beschleunigungsschalter 4 gesteuert, von der Batterie 6 mit Strom versorgt.

Die einzelnen Stufen sind über nicht dargestellte Leitungen mit der Stromquelle 6 verbunden, eine «Resetleitung» überträgt das Schaltsignal des Beschleunigungsschalters auf die einzelnen Stufen und setzt diese in die Ausgangsposition zurück.

Die Schaltung 35 enthält die gesamte Auswerteschaltung und kann entweder als sogenannter Kunden IC ausgebildet sein, oder als sogenannte «ULA», bei welchen die verschiedenen logischen Digitalstufen durch eine einzige kundenspezifische Maske zu der gewünschten Schaltungskonfiguration verbunden werden.

Die Temperaturanzeige kann z.B. auch analog in Balkenform, ähnlich einer Quecksilbersäule, erfolgen anstelle der gezeichneten Anzeige mittels einer Digital-Anzeigevorrichtung.

Die Anzeige des Eichzustandes kann eine bestimmte Zeit nach dem Einschalten automatisch in die Messanzeige umgeschaltet werden. Der Mikroprozessor ermöglicht ein Blinken der Anzeigevorrichtung, so lange die Temperaturanzeige steigt, d.h. so lange der Gradient des Temperaturanstieges in der Messsonde eine bestimmte Grösse hat. Diese Anzeige kann auch akustisch erfolgen.

Der Mikroprozessor ist auch imstande, aus wenigen Messpunkten am Beginn der Messung den Endwert zu errechnen. Damit ist eine sekundenschnelle Messung möglich.

Bei den jetzt erreichten Batteriequalitäten, z.B. Lithium-Batterien, ist eine Ausstattung des Thermometers mit einer Batterie auf Lebensdauer möglich. Das erübrigt den Deckel für die Batteriekammer und erlaubt ein hermetisch dichtes Gerät zu bauen.

Das Schalter kann mehrpolig sein und aus Ruhe- und Arbeitskontakten bestehen.

**Patentansprüche**

1. Elektronisches Fieberthermometer mit einem im wesentlichen stabförmigen Gehäuse (1), das an einem Ende einen Temperaturfühler (2) aufweist, mit einem Schaltkreis (3), einem Speicher (34) zum Speichern des Wertes der höchsten gemessenen Temperatur und mit einer Anzeigevorrichtung (13) für den gespeicherten Inhalt des Speichers und mit einer Schalteinrichtung, dadurch gekennzeichnet, dass die Schalteinrichtung einen Schalter (4) enthält, der als Beschleunigungsschalter ausgebildet ist und ein in Richtung der Längsachse des stabförmigen Gehäuses (1) bewegliches Gewicht (16, 21) aufweist, wobei das Gewicht (16, 21) beim Ausführen einer Schleuderbewegung entgegen der Kraft einer Feder (15, 19) zum kurzzeitigen Schliessen von Kontakten (14, 15; 17, 18, 20) beweglich ist, und dass durch die Schliessung des Beschleunigungsschalters ein willkürliches Ein- und/oder Ausschalten des Fieberthermometers bzw. ein Löschen des Messwertspeichers erfolgt.

2. Fieberthermometer nach Anspruch 1, dadurch gekennzeichnet, dass die Schalteinrichtung als zeitabhängige, elektronische Programmschalteinrichtung ausgebildet ist, wobei der Start des Programmablaufes durch den Beschleunigungsschalter (4) steuerbar ist und im ersten Programmschritt der Schalteinrichtung die Elektronik auf Kontrolle der Eichung und/oder der Batteriespannung, in einem weiteren Programmschritt auf Temperaturmessung schalbar ist, während im letzten Programmschritt die Abschaltung des Gerätes oder die Umschaltung auf eine andere Funktion steuerbar ist.

3. Fieberthermometer nach Anspruch 1 oder 2, dadurch gekennzeichnet, dass der Schalter als Einschalter ausgebildet ist und der elektronische Schalter ein Zeitglied enthält, welches nach einer vorgewählten Zeit die Temperaturanzeige löscht und das Gerät abschaltet bzw. auf eine andere Funkton z.B. Uhrbetrieb umschaltet.

4. Fieberthermometer nach Anspruch 3, dadurch gekennzeichnet, dass der elektronische Schalter bei Betätigung im eingeschalteten Zustand des Gerätes den gespeicherten Messwert löscht und die Anzeige auf den Ausgangswert zurücksetzt.

5. Fieberthermometer nach Anspruch 3 oder 4, dadurch gekennzeichnet, dass der elektronische Schalter bei Betätigung ein zeitabhängiges Programm auslöst, welches in einem ersten Programmschritt die Eichung bzw. den Batteriezustand überprüft und gegebenenfalls anzeigt und in einem zweiten Schritt auf Messbereitschaft schaltet.

## Claims

1. An electronic fever thermometer comprising a substantially rod-shaped housing (1) containing at one end an temperature sensor (2), a switching circuitry (3), a memory (34) for storing a maximum temperature value measured and a display (13) for indicating the stored content of the memory, and a switching device characterized in that the switching device includes a switch (4) designed as acceleration switch and comprising a mass (16, 21) movable in the direction of the longitudinal axis od the rod-shaped housing (1) the mass (16, 21), the mass (16, 21) upon the imposition of acceleration being displaceable against the force of a spring (15, 19) for a short-time closing of contacts (14, 15; 17, 18, 20) and in that closing the acceleration switch causes an intentional switching on and/or off of the fever thermometer and an ereasing of the measured value memory respectively.

2. A fever thermometer as claimed in claim 1, characterised in that said switching device is designed as an electronical program switching device dependent on time, the start of the program operation being controllable by said acceleration switch (4) and the electronics of said switching device being switchable to checking up the gauging and/or the battery voltage is the first program step, and in a further step to measuring the temperature, while in the last program step deactivating at switching to another function is manageable.

3. A fever thermometer as claimed in claim 1 or 2 characterised in that said switch being designed as a closing switch and said electroni switch comprising a timing member, which is deactivating the temperature display and the instrument and is switching to another function e.g. clock-function respectively after a predetermined lapse of time.

4. A fever thermometer as claimed in claim 3, characterised in that said electronic switch upon operating in the working status deletes the stored measured value and resets said display to start value.

5. A fever thermometer as claimed in claim 3 or 4 characterised in that said electronic switch upon operating starts a program dependent on time which in a first program step is checking up and is indicating the gauging and the condition of the battery respectively if neccessary and in a second step is switching to preparedness of measuring.

## Revendications

1. Thermomètre médical électronique comprenant un boîtier (1) en forme de barreau avec un capteur de température (2) à une extrémité, un circuit électronique (3), une mémoire (34) pour mémoriser la valeur de la température la plus élevée mesurée, un dispositif indicateur (13) pour indiquer le contenu mémorisé de la mémoire et un dispositif de commutation, caractérisé par le fait que le dispositif de commutation comprend un interrupteur (4) qui est réalisé sous la forme d'un interrupteur à accélération et présente un poids (16, 21) mobile suivant la direction de l'axe longitudinal du boîtier (1) en forme de barreau, ledit poids (16, 21), lors de l'exécution d'un mouvement d'accélération, étant déplaçable à l'encontre de la force d'un ressort (15, 19) en vue de la fermeture de courte durée de contacts (14, 15; 17, 18, 20), et que la fermeture de l'interrupteur à accélération entraîne une mise en service et/ou mise hors service arbitraire du thermomètre médical ou un effacement de la mémoire de valeur mesurée.

2. Thermomètre médical suivant la revendication 1, caractérisé par le fait que le dispositif de commutation est réalisé sous la forme d'un dispositif électronique de commutation par programme chronologique, le démarrage du déroulement du programme étant déclenché par l'interrupteur à accélération (4) et dans une première étape du programme, le dispositif de commutation commute l'électronique sur la fonction de contrôle de l'étalonnage et/ou de la tension de batterie et dans une autre étape du programme sur la fonction de mesure de température, tandis que la dernière étape du programme commande la mise hors service de l'appareil ou la commutation sur une autre fonction.

3. Thermomètre médical suivant la revendication 1 ou 2, caractérisé par le fait que l'interrupteur est réalisé sous la forme d'un interrupteur de fermeture et l'interrupteur électronique contient un organe de temporisation qui, après une durée présélectionnée, efface l'indication de température et met hors service l'appareil ou le commute sur une autre fonction, par exemple une fonction de montre.

4. Thermomètre médical suivant la revendication 3, caractérisé par le fait qu'en cas d'actionnement à l'état de service de l'appareil, l'interrupteur électronique efface la valeur mesurée mémorisée et ramène l'indication à la valeur de départ.

5. Thermomètre médical suivant la revendication 3 ou 4, caractérisé par le fait que l'interrupteur électronique, lors de l'actionnement, déclenche un programme chronologique qui dans une première étape du programme contrôle l'étalonnage ou l'état de la batterie et le cas échéant l'indique et dans une seconde étape commute sur disponibilité de mesure.

Fig.1

Fig.2

Fig.3

Fig.4

Fig. 5